(19) Europäisches Patentamt
European Patent Office
Office européen des brevets

(11) Veröffentlichungsnummer: **0 477 679 B1**

(12) **EUROPÄISCHE PATENTSCHRIFT**

(45) Veröffentlichungstag der Patentschrift: **06.12.95**

(51) Int. Cl.$^{6}$: **C08F 36/04**, C08F 4/48, C08C 19/44, C07F 1/02

(21) Anmeldenummer: **91115439.1**

(22) Anmeldetag: **12.09.91**

# (54) Lebende Polymere, Verfahren zu ihrer Herstellung und ihre Verwendung zur Herstellung von Telechele.

(30) Priorität: **26.09.90 DE 4030400**

(43) Veröffentlichungstag der Anmeldung:
**01.04.92 Patentblatt 92/14**

(45) Bekanntmachung des Hinweises auf die Patenterteilung:
**06.12.95 Patentblatt 95/49**

(84) Benannte Vertragsstaaten:
**BE DE ES FR GB IT NL**

(56) Entgegenhaltungen:
**EP-A- 0 363 659**

**WORLD PATENTS INDEX LATEST Week 8318, Derwent Publications Ltd., London, GB; AN 83-43411K**

(73) Patentinhaber: **BASF Aktiengesellschaft**
**Carl-Bosch-Strasse 38**
**D-67063 Ludwigshafen (DE)**

(72) Erfinder: **Bronstert, Klaus, Dr.**
**Gartenstrasse 26**
**W-6719 Carlsberg (DE)**
Erfinder: **Knoll, Konrad, Dr.**
**Werderplatz 4**
**W-6800 Mannheim 1 (DE)**
Erfinder: **Haedicke, Erich, Dr.**
**Pferchweg 2 b**
**W-6945 Hirschberg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 477 679 B1

**Beschreibung**

Beschreibung

Die Erfindung betrifft Telechele, insbesondere aus konjugierten Dienen, sowie ein Verfahren zu ihrer Herstellung, ferner auch Blockcopolymere, die mindestens 3 Blöcke enthalten. Telechele sind an beiden Molekülenden funktionalisierte Polymere.

"Ideale", z.B. als Präpolymere für hochwertige Polyurethankautschuke besonders geeignete OH-terminierte Polydientelechele sollten nach Schnecko et al, (Angewandte Makromolekulare Chemie, 70 (1978), S. 10, (Nr. 1632)) dem folgenden Anforderungsprofil entsprechen:

| | |
|---|---|
| $\alpha,\beta$-Funktionalität | mindestens 95 % Bifunktionalität |
| Glastemperatur | unter -60 °C |
| Mikrostruktur | hohe 1,4-Konfiguration |
| Molmassenverteilung | eng (Mw/Mn < 1,3) |
| Molmasse | 3000 - 10.000, bevorzugt 3000 - 5000 |

Als beste Methode, um solche eng verteilte funktionalisierte Dienpolymere zu erhalten, die ausreichend stabil sind und im wesentlichen bifunktionell substituiert sind, gilt die anionische Polymerisation mit bifunktionalen, in Kohlenwasserstoffen löslichen Initiatoren. Ein zweistufiges Verfahren zur Herstellung von Polybutadien mittels bifunktioneller Initiatoren auf anionischem Weg ist in der SU-A-304 827 beschrieben.

Es sind viele bifunktionelle Initiatoren bekannt. Ein überblick wird u.a. von Schnecko et al (s. oben), D.M. French, Rubber Chemistry and Technology 42, 71, (1969), ferner von Morton, Fetters et al, Rubber Chemistry and Technology 49, 303, (1976) gegeben. Sie erfüllen jedoch durchweg die obigen Anforderungen nicht.

Da viele der beschriebenen Initiatoren in Kohlenwasserstoffen unlöslich sind, wird die Polymerisation häufig in zwei Stufen durchgeführt (GB-A-972 246). In der ersten Stufe wird z.B. in Diethylether oder einem anderen polaren Lösungsmittel aus einem Dien in Gegenwart von Methylnaphthalin oder Stilben durch Umsatz mit Lithium in 40 h bei -26 °C ein oligomeres, in Kohlenwasserstoffen lösliches Präpolymer hergestellt. Nach Zusatz eines Kohlenwasserstoffs wird dann in einer zweiten Stufe, i.a. nach Abdestillieren des polaren Lösungsmittels, mit weiterem Dien die Polymerisation zu Ende geführt.

Die Destillation ist wegen der hohen Viskosität der Lösung schwierig. Es geht ein Teil der Aktivität verloren, und der Ether kann nicht vollständig entfernt werden. Morton und Fetters (s. oben) arbeiten deshalb in Triethylamin oder Anisol, die vor der zweiten Polymerisationsstufe nicht abdestilliert werden. Es entstehen jedoch Telechele mit einem zu hohen Gehalt an monofunktionellen Oligomeren, und zu hohem Anteil an in 1,2- bzw. 3,4-Konfiguration eingebauten Monomeren, d.h. Kurzkettenverzweigungen.

Monofunktionelle Nebenprodukte bilden sich auch, wenn man gewisse Initiatoren verwendet, die ohne Modifizierung gut in Kohlenwasserstoffen löslich sind, wie sie u.a. in den US-A-3 787 510, Makromol. Chem. 184 (1983) 1833 - 99, und US-A-4 450 259 beschrieben werden. Polymerisiert man mit derartigen, an sich sehr stabilen Initiatoren z.B. Butadien in reinem Kohlenwasserstoff, so wachsen die entstehenden Polymeren zum Teil monofunktionell. Dies deutet, ebenso wie eine im GPC-Diagramm zu beobachtende, breite (vom Fachmann als "tailing" bezeichnete) häufig bimodale Molmassenverteilung auf eine Behinderung der Initiierung hin. In Gegenwart geringer Mengen an Ether oder THF können diese Erscheinungen zum Teil vermieden werden, aber man beobachtet dann Kurzkettenverzweigung, d.h. daß ein erhöhter Anteil an Monomeren in 1,2- bzw. 3,4-Konfiguration eingebaut worden ist.

Es besteht daher Bedarf an einem Verfahren, mit dem sich Polydien-Telechele mit hoher Funktionalität, niedrigem Gehalt an Kurzkettenverzweigungen und enger Molmassenverteilung in Kohlenwasserstoffen in An- oder Abwesenheit von polaren Lösungsmitteln herstellen lassen.

Erfindungsgemäß werden bifunktionelle lebende Polymere, die Telechele bilden können, erhalten, indem man einen bifunktionellen Initiator, dessen anionische Zentren aliphatische C-Atome sind, die außer durch Lithium und einen aliphatischen Kohlenasserstoffrest entweder durch 2 Arylreste oder durch einen Arylrest und ein Wasserstoffradikal substituiert sind, wobei einer der Arylreste auch Bestandteil beider anionischer Zentren sein kann,

- in einer ersten Reaktionsstufe in Gegenwart von höchsten 2,5 Mol, vorzugsweise jedoch von weniger als 0,5 Mol eines aliphatischen Ethers oder tertiären Amins je Mol Lithium und mindestens 2 Mol/l, vorzugsweise mehr als 6 Mol/l oder 50 Vol.-% eines konjugierten Diens bei einer Temperatur zwischen -40 °C und +35 °C mit mindestens 2 Mol Dien umsetzt, wobei niedermolekulare, ihrerseits

als bifunktionelle Initiatoren wirksame Dienoligomere gebildet werden und mit diesen

- in einer zweiten Reaktionsstufe, vorzugsweise nach Verdünnung mit inerten Kohlenwasserstoffen, in an sich bekannter Weise bei einer Temperatur über 40 °C bis zu 100 °C, vorzugsweise zwischen 50 und 70 °C, gegebenenfalls unter Zugabe weiterer Monomerer Polymeren der gewünschten Molmasse gewinnt.

Die erhaltenen lebenden Polymeren können mit üblichen Funktionalisierungsreagentienin Telechele umgewandelt werden.

Die Arylreste des Initiators können z.B. sein: ein Phenyl-, Naphthyl-, Biphenylyl- oder Pyridyl-Rest sowie deren durch höchstens 4 Alkyl-, Alkoxy-, Phenoxy- oder tertiäre Aminogruppen je aromatischen Kern substituierte Derivate. Besonders geeignet sind Arylreste, die 1 - 4 Alkylgruppen tragen, wobei jedoch entweder die 1- oder 5-Stellung nicht substituiert sein darf.

Bekannte geeignete, in Kohlenwasserstoffen lösliche bifunktionelle Initiatoren werden in der EP-A-405 327, EP-A-363 659 beschrieben. Weitere Verbindungen werden nachstehend beschrieben. Bifunktionelle Initiatoren werden z.B. hergestellt durch Dimerisierung von $\beta$-Alkylstyrolen oder von alkylierten 1,1-Diphenylethylenen mit metallischem Lithium oder durch Metallisierung von kernalkylierten Stilbenen mit Lithiummetall in Gegenwart von mindestens 2 Mol eines polaren Lösungsmittel je Mol Olefin, vorzugsweise in Gegenwart von aliphatischen Ethern und/oder tertiären Aminen. Dabei geht man zweckmäßig folgendermaßen vor:
Die erforderlichen olefinisch ungesättigten Verbindungen werden - zweckmäßig unter Inertgas - entweder in Diethylether oder einem Lösungsmittel, das mindestens 4 bis 6 mol Ether je Mol Zielprodukt enthält (im übrigen z.B. aus einem Aromaten wie Toluol oder Benzol besteht) mit einem Lithiumüberschuß bei 15 - 30 °C metalliert; sodann wird der Ether i.a. unter vermindertem Druck abdestilliert.

Nach dem Aufkonzentrieren entstehen so ca. 50 - 90 Gew.-% bzw. 1,5 - 2 Mol/l enthaltende, je nach Arylrest tief grünschwarze oder schwarzbraune ölige Lösungen, die in dieser Form für die weitere Umsetzung eingesetzt werden. Sie enthalten im allgemeinen nicht mehr als 0,3 Mol Ether je Mol gebundenen Lithiums. Dieser Etherrest kann, wenn erforderlich, durch fraktionierte Destillation auf weniger als 0,1 Mol Ether/Mol Lithium vermindert werden.

Wird auch der zugegebene Kohlenwasserstoff nahezu vollständig wieder entfernt, so liegt der Katalysator in einer plastischen oder kristallinen, hochkonzentrierten Form vor, die sich beim Einarbeiten eines Diens wieder verflüssigt. Die Verwendung von Initiatoren, die in nichtkristalliner Form auftreten, ist bevorzugt.

Zur Auswahl geeigneter Initiatoren ist folgendes zu sagen:
Initiatoren aus metallierten Stilbenen oder dimerisierten Derivaten des 1,1-Diphenylethylens liefern bei der Umsetzung mit Dien i. a. eine höhere Ausbeute an Bifunktionalität als solche aus $\beta$-Alkyl-Styrolen. Die im Kern alkylierten Derivate aller Verbindungsklassen sind wirksamer als die nicht alkylierten Grundsubstanzen.

Der Initiator aus 1,1-Diphenylethylen selbst ist wegen seiner schlechten Löslichkeit nur in Gegenwart von 2 - 2,5 Mol Ether je Mol enthaltenes Lithium verwendbar.

Zur Herstellung der bifunktionellen Ausgangsinitiatoren kann man natürlich Mischungen verschiedener aromatischen Olefine verwenden. Das kann sinnvoll sein, wenn ein Initiator z.B. zur Kristallisation neigt oder allein in Kohlenwasserstoffen nicht löslich ist. Durch geeignete Codimerisierung können diese Nachteile überwunden werden. Mit geeigneten Partnern kann so auch 1,1-Diphenylethylen in Kohlenwasserstoffen lösliche Katalysatoren liefern.

Verwendet man metallierte alkylierte Stilbene als Initiator, so wird die Polymerisation vorwiegend unter Übertragung des Lithiums auf die Monomeren initiiert. Die Stilbene finden sich daher im fertigen Telechel wieder.

Bei der erfindungsgemäß bevorzugten Arbeitsweise wird die erste Stufe (Oligomerisation) in reinem Monomer durchgeführt. Es sollte in dieser Stufe jedoch nur soviel Monomer umgesetzt werden, wie dies zur Aktivierung der Initiatoren erforderlich ist, da bei niedriger Temperatur ein höherer Anteil des Diens mit 1,2-Konfiguration in die Polymeren eingebaut werden als bei der höheren Temperatur, die in der zweiten Stufe herschen soll.

Als Monomere für die erste Stufe werden vorzugsweise Butadien oder Isopren verwendet. Styrol reagiert i. a. zu schnell, so daß die Reaktion zum "Durchgehen" neigt. In einer Mischung von z.B. bis zu 50 % Styrol mit Dien kann es dagegen gut verwendet werden.

Zur Herstellung der kohlenwasserstofflöslichen Oligomeren reicht im Prinzip 1 Mol Dien je Mol Initiator aus; in der Praxis werden jedoch wegen der in Konkurrenz ablaufenden Polymerisation bis zum vollständigen Umsatz aller Initiatormoleküle im statistischen Mittel mehr als 4 Mol je Mol Initiator benötigt. Ein guter Indikator für die vollständige Aktivierung des Initiators ist das Verschwinden seiner intensiven Eigenfarbe in folge der Umwandlung der Benzyl- bzw. Diarylmethyl-anionen in wenig gefärbte Dienyl-anionen. In der Praxis schlägt die Farbe abhängig von dem Reaktionsbedingungen innerhalb von 5 - 60 Minuten von tiefem

Braunschwarz oder Grünschwarz um in durchsichtiges Orange oder Hellgelb.

Die Erfindung unterscheidet sich vom Stand der Technik dadurch, daß aus aromatischen Olefinen hergestellte, im Kern alkylierte, im wesentlichen etherfreie, in Kohlenwasserstoffen lösliche bifunktionelle Initiatoren in einer ersten Stufe bei sehr niedriger Konzentration oder Abwesenheit des polaren Lösungsmittels und bei hoher Monomerkonzentration zu i.w. bifunktionellen Präpolymeren, d.h. Oligomeren umgesetzt werden. Die bekannten Verfahren arbeiten in dieser Stufe dagegen mit in Kohlenwasserstoffen wenig löslichen Initiatoren in konzentriertem oder reinem polaren Lösungsmittel bei niedriger Dienkonzentration, wobei das Dien wegen der unter diesen Bedingungen hohen Reaktionsgeschwindigkeit in Portionen oder langsam kontinuierlich zugegeben wird. Das erfindungsgemäße Verfahren ermöglicht hingegen das Arbeiten ohne Lösungsmittel in reinem Monomeren. Die Reaktion bleibt auch bei höchster Initiator-Konzentration gut beherrschabar.

Durch das erfindungsgemäße Verfahren entfällt die aufwendige, nach dem Stand der Technik erforderliche Entfernung des Ethers nach der ersten Stufe der Polymerisation aus der hochviskosen Lösung des Präpolymeren, die nur unvollständig gelingt.

Nach dem erfindungsgemäßen Verfahren lassen sich unter der vorgenannten Einschränkung alle Monomeren verarbeiten, die für anionische Polymerisation in Kohlenwasserstoffen üblicherweise verwendet werden. Dies sind insbesondere konjugierte Diene sowie Vinylaromaten, z.B. Butadien, Isopren, 3,4-Dimethylbutadien, 1-Methylbutadien, Styrol, im Kern alkylierte Styrole wie p.-Methylstyrol, p,o-Dimethylstyrol ferner in der zweiten Reaktionsstufe auch $\alpha$-Methylstyrol. Diese Aufzählung ist beispielhaft und soll keine Einschränkung bedeuten.

Durch Verwendung eines gut löslichen, aus aromatischen Olefinen hergestellten Initiators in Verbindung mit einer zweistufigen Polymerisation, bei der die Initiatoren in der ersten Stufe bei niedriger Ether- und hoher Dienkonzentration aktiviert werden, werden nach dem erfindungsgemäßen Verfahren Telechele zugänglich, die im Vergleich zum Stand der Technik sehr enge Molmassenverteilung, hohe Funktionalität und einen hohen Gehalt an 1,4-Konfiguration aufweisen. Es werden Telechele erhalten, deren Gehalt an bifunktionellen Oligomeren über 90 %, vorzugsweise über 95 % liegen, die eine Molmassenverteilung $\overline{M}_w/\overline{M}_n$ von unter 1,1 aufweisen und deren Anteil an Kurzkettenverzweigungen unter 40 %, vorzugsweise unter 25 % liegt, wobei dieser Gehalt mit zunehmender Molmasse der Telechele bis auf ca. 9 - 12 % gesenkt werden kann.

Alle zur Herstellung der Telechelen erforderlichen Operationen sind, wie bei der Arbeit mit metallorganischen Verbindungen üblich, unter strengem Ausschluß von Sauerstoff und Feuchtigkeit durchzuführen. Die Lösungsmittel und Monomeren werden vor der Verwendung gereinigt, z.B. durch Destillation über Calciumhydrid oder Aluminiumalkyl.

Nach den erfindungsgemäßen Verfahren kann man auch Blockcopolymere in weniger Stufen herstellen, als mit monofunktionellen Initiatoren. Polymerisiert man z.B. nacheinander Butadien und Styrol, so erhält man in 2 Stufen 3-Blockcopolymere, die in ihren Eigenschaften solchen Polymeren gleicher Zusammensetzung entsprechen, die z.B. nach bekannten Methoden mit monofunktionellem Katalysator durch 3-stufige Polymerisation (Styrol → Butadien → Styrol) hergestellt wurden. Die nach oxidativem Abbau des Polybutadienteiles der Blockcopolymere mit Osmiumtetroxid (vgl. Angew. Makromol. Chem. 26 (1972), Seite 207) verbleibenden Polystyrolblöcke haben bei beiden Polymerisationsmethoden die gleiche Molmasse.

Erfindungsgemäß hergestellte 3-Blockcopolymere S → Bu → S, enthalten im Gegensatz zu solchen, die durch Kupplung von lebenden 2-Blockcopolymeren hergestellt wurden, keine 2-Blockcopolymeren und haben daher ein besonders gutes Eigenschaftsprofil.

Die Viskosität erfindungsgemäß hergestellter lebender Polymerlösungen ist bei gleicher Molmasse höher als die von mit monofunktionellen Initiatoren hergestellten lebenden Polymeren, weil die Kettenenden durch Assoziation ein reversibles, physikalisches Netzwerk bilden. Die Viskosität ist in Kohlenwasserstoffen am höchsten. Sie wird durch Umwandlung der carbanionischen Endgruppen mit Terminierungsreagentien in z.B. Lithiumcarboxylat-, Lithiumamid-, Lithiumalkoholat- oder Lithiumthiolatendgruppen so verstärkt, daß auch bei niedriger Polymerkonzentration und Molmasse die Bildung eines aspikähnlichen Gels beobachtet wird. Um vollständigen Umsatz zu erreichen, muß daher mit entsprechender Rührenergie und hohem Drehmoment gut gemischt werden. Im Interesse hoher Funktionalität ist es vorteilhaft, die Terminierung bei niedriger Viskosität bzw. in nicht zu hoher Konzentration$_1$ z.B. bei 6 - 10 % Feststoffgehalt vorzunehmen. Versetzt man das entstandene Gel mit Wasser, Alkohol oder anderen, aktiven Wasserstoff enthaltenden Verbindungen, so nimmt die Vikosität um mehrere Größenordnungen ab, und die Lösung wird wasserdünn.

Die Terminierungsausbeute liegt bei guter Durchmischung sehr hoch. Gute Polybutadientelechele enthalten z.B. bei einer Molmasse von 5000 bis 10 000 mehr als 95 bis über 99 Gew.-%. Oligomere der Funktionalität 2. Der Rest besteht aus monofunktionellem und wenig nicht funktionalisiertem Polybutadien.

Die Methoden zur Funktionalisierung der lebenden Kettenenden sind bekannt. Geeignete Funktionalisierungsreagentien sind z.B. Oxirane, die endständige primäre oder sekundäre Hydroxylfunktionen liefern (vgl. US-A-3 786 116), oder Thiirane, mit denen endständige Mercaptogruppen eingeführt werden können. Nach der EP-A-211 395 oder der EP-A-244 603 kann man Polymere enthalten, die am Kettenende mindestens eine Aminogruppe enthalten. Die Umsetzungen sind eingehend beschrieben, können aber auch den folgenden Beispielen entnommen werden.

Die hergestellten Polymeren können, wenn sie ganz oder zum Teil aus Dienen aufgebaut wurden, hydriert werden. Die Hydrierung mit molekularem Wasserstoff und geeigneten Hydrierkatalysatoren ist bekannt, z.B. in der US-A-3 113 986, der DE-A-1 222 266, DE-A-2 013 263, DE-A-1 106 961 oder DE-A-1 595 345 beschrieben.

Nach dem erfindungsgemäßen Verfahren hergestellte, an beiden Kettenenden mit Mercapto-, Hydroxyl- oder Aminogruppen funktionalisierte Polymere sind u. a. als Präpolymere für Polyurethane, Epoxidharze oder für deren Modifizierung von besonderem Interesse.

Die Herstellung z.B. von Epoxidharzen oder von elastomeren Polyurethanen aus einem "Hartsegment" aus aromatischen Polyisocyanaten und einem "Weichsegment" aus funktionalisierten flexiblen Makromolekülen wird z.B. von H.P. Elias, Makromoleküle, Seiten 778 bis 780 und 809 bis 812, 4. Aufl. (1981), Hüttig und Wepf Verlag, Basel-Heidelberg-New York, und der dort zitierten Literatur beschrieben.

Funktionalisierte Polymere, die an den Kettenenden Amino- oder Hydroxylgruppen enthalten, können z.B. mit Diisocyanaten und anderen Reagentien vernetzt werden. Lösungen solcher Polybutadiene, versetzt mit Diisocyanaten, ausgegossen auf silikoniertes Papier und getrocknet, ergeben bei überwiegend aus Dienen aufgebauten Polymere elastische, trockene, in Kohlenwasserstoffen unlösliche Filme, die sich von der Unterlage abziehen lassen und hohe reversible Dehnbarkeit aufweisen.

Polybutadiendiole zeichnen sich als "Weichsegmente" in thermoplastischen Polyurethanen durch besonders gute Entmischung von "Hart- und Weichsegmenten" aus, was aus anwendungs- und verarbeitungstechnischen Gründen unerwünscht ist, wie dies auch von Becker und Braun, Kunststoffhandbuch, Band 7, Polyurethane, Seite 33 (1983), 2. Aufl., Hander Verlag, München-Wien, beschrieben wird.

Bei gleicher Molmasse aus dem Gewichtsmittel ($\overline{M}_w$) weisen die erfindungsgemäß hergestellten telechelen Diole wegen ihrer engen Molmassenverteilung eine niedrigere Viskosität auf als bekannte Präpolymere, wie z.B. radikalisch hergestellte Polybutadientelechele, Polytetrahydrofuran oder Polyester. Sie sind daher besser verarbeitbar.

Die nach dem erfindungsgemäßen Verfahren erhaltenen Telechele und Polymeren können eine Durchschnittsmolmasse (Gewichtsmittel Mw) z.B. zwischen 1500 und 500 000, vorzugsweise 3000 und 130 000 aufweisen, ermittelt durch Gelpermeationschromatographie (GPC) und Vergleich mit standardisierten, zur Eichung geeigneten Polymeren (vgl. G. Glöckner, "Polymercharakterisierung durch Flüssigkeitschromtographie", Verlag A. Hüthig, Heidelberg (1982)).

Die Molmasse wird zweckmäßig vor der Funktionalisierung ermittelt, da manche funktionalisierte Polymere von GPC-Säulen irreversibel adsorbiert werden und diese unbrauchbar machen.

Die Aufarbeitung der Polymeren erfolgt auf übliche Weise, z.B. durch Fällen mit einem Nichtlösungsmittel, durch Abdampfen des Lösungsmittels oder durch Wasserdampfdestillation. Auch Entgasung auf einen Entgasungsextruder ist möglich.

In den Beispielen wurden Initiatoren aus den folgenden Ausgangsolefinen verwendet:

I 1,1-Diphenylethylen (Molmasse 178)
II p,m,p',m'-Tetramethyl-1,1-Diphenylethylen (Molmasse 236)
III $\beta$-Isooctylstyrol (Molmasse 216)
IV p-Isopropyl-$\beta$-n-heptylstyrol (Molmasse 244)
V m,p-Dimethyl-$\beta$-Ethylstyrol (Molmasse 160)
VI m,m,p-Trimethyl-$\beta$-Ethylstyrol (Molmasse 174)
VII 4-t-Butyl-4'-Hexadecyl-(2)-Trans-Stilben (Molmasse 460)

Die Lösungsmittel (Cyclohexan, Methylcyclohexan, Heptan, Diethylether) wurden durch Destillation über Butyllithium von Verunreinigungen befreit.

Stickstoff wurde mit einer Mischung aus Weißöl, 1 Gew.-% Styrol und 5 Gew.-% Lithiumbutyl gewaschen.

Lithium wurde in Form eines 1 bis 5 mm großen Granulates der Firma Merck-Schuchardt verwendet.

Für die Polymerisationsversuche wurden handelsübliches Butadien, Dimethylbutadien, Isopren und Styrol eingesetzt. Vor der Verwendung wurden die Monomeren nach Zusatz von 0,5 Gew.-% Triisobutylaluminium durch Destillieren gereinigt.

Für die Funktionalisierung wurde handelsübliches Ethylenoxid, das einer Stahlflasche entnommen und über Aluminiumtriisobutyl destilliert war, verwendet. Außerdem wurde mit gereinigtem Benzanilid terminiert.

Charakterisierung der erfindungsgemäßen Initiatoren und Polymeren

Bestimmung der Polymerisationsaktivität (PA)

Unter PA wird der Gehalt an polymerisationsaktivem Lithium verstanden. 1 Mol bifunktioneller Initiator entspricht also 2 Mol PA.

Aus dem Reaktor oder dem Vorratsgefäß werden mit einer kalibrierten 5 ml-Einwegspritze aus Polypropylen, die mit einer 15 cm langen Kanüle versehen ist, unter inerten Bedingungen (die Spritze wird durch mehrfaches Aufziehen und Entleeren der Reaktionslösung von Verunreinigungen befreit) eine ca. 2 bis 3 mmol PA enthaltende Menge an Lösung entnommen und durch eine Gummikappe in einen mit Magnetrührer versehenen und mit Reinstickstoff gespülten 250-$cm^3$-Kolben gegeben, in dem sich 100 ml Toluol befinden. Verunreinigungen im Toluol wurden zuvor mit der Reaktionslösung bis auf schwache Gelbfärbung austitriert. Die intensiv gefärbte Lösung wird dann mit einer 5 $cm^3$ fassenden kalibrierten Injektionsspritze mit 1 n-Isopropanol in absolutem Toluol farblos titriert. Die Gesamtmenge an PA im Reaktor errechnet sich dann aus

$$\frac{\text{Vorrat + Entnahme } (cm^3)}{cm^3 \text{ Entnahme}} \times cm^3 \text{ 1 n i-Propanol} = \text{mmol PA}$$

Bestimmung des Alkaligehaltes

Wie unter a) beschrieben, wird eine ca. 1 mmol PA entsprechende Menge Initiatorlösung entnommen und unter Stickstoff in eine Mischung aus 10 $cm^3$ Cyclohexan und 1 $cm^3$ Methanol gegeben. Die farblose Mischung wird dann mit 20 $cm^3$ destilliertem Wasser ausgeschüttelt. Nach dem Absetzen wird der klare wäßrige Extrakt mit einer Injektionsspritze entnommen und die Lösung noch zweimal mit je 10 $cm^3$ Wasser extrahiert. Die vereinigten Extrakte werden in einem Erlenmeyerkolben so lange gekocht, bis alles organische Lösungsmittel entfernt ist. Nach Abkühlen wird mit n/10 HCL und Phenolphthalein titriert.

$$\frac{\text{Vorrat + Entnahme } (cm^3)}{cm^3 \text{ Entnahme} \times 10} \times cm^3 \text{ n/10 HCl} = \text{mmol Alkali}$$

Bestimmung des im Initiator enthaltenden Ethers bzw. tertiären Amins

5 $cm^3$ der Initiatorlösung, die ca. 1 bis 3 mmol PA enthalten, werden in einem 25 $cm^3$ fassenden Destillationskolben unter Stickstoff mit X $cm^3$ einer Lösung von 1 n-Isopropanol in Toluol bis zur Entfärbung titriert. Das gesamte Lösungsmittel wird dann in einem mit Methanol/Kohlensäuremischung gekühlte Vorlage übergetrieben und im Destillat der Gehalt an Ethern bzw. Aminen in Gew.-% durch Gaschromatographie bestimmt. Es wurde ein Gaschromatograph der Fa. Shimadzu GC-2BT mit der Säule Carbowax 20M bei 60 °C benutzt.

Das Molverhältnis von Ether (bzw. polarem Lösungsmittel) zu Polymerisationsaktivität (PA) ergibt sich aus

$$\frac{\text{Gew.-\% Ether} \times (5 + X)\ (cm^3)}{\text{mmol PA} \times 7{,}2} = \frac{\text{mol Ether}}{\text{PA}}$$

Bestimmung von Molmasse und Molmassenverteilung durch GPC

Zur Analyse wurden die nicht funktionalisierten Proben verwendet. Gemessen wurde mit einem GPC-Gerät der Fa. Waters. Die Molmassen wurden anhand von Eichkurven durch Vergleich mit standardisierten, zur Eichung geeigneten Polymeren bestimmt (vgl. G. Glöckner, "Polymercharakterisierung durch Flüssigkeitschromatographie", Verlag H. Hüthig, Heidelberg, 1982). Gemessen wurde in 0,25 %iger Lösung in THF bei 23 °C und einer Durchlaufgeschwindigkeit von 1,2 $cm^3$/min. Bestimmt wurde Mn, Mw (Zahlenmittel, Gewichtsmittel) und daraus Mw/Mn als Maß für die Uneinheitlichkeit errechnet. Hierzu wurde ein von der Fa. Polymer Standard Services, Mainz, BRD entwickeltes Computerprogramm benutzt.

Bei (Block)copolymeren wurde als Molmasse empirisch das der Zusammensetzung entsprechende arithmetische Mittel der Molmassen aus den Eichkurven der beiden Homopolymeren zugrundegelegt.

Bestimmung des Stickstoffgehaltes

Der Gesamtstickstoffgehalt wurde nach Kjeldahl bestimmt.

Bestimmung der Funktionalität von OH-terminierten Telechelen durch HPLC

Da die Ermittlung der Funktionalität aus Molmasse und OH-Zahl oder Stickstoffgehalt nur einen ungenauen statistischen Mittelwert liefert, wurde der Gehalt der Telechele an Oligomeren mit verschiedener Funktionalität durch HPLC-Analytik bestimmt.

Die Telechele wurden unter folgenden Bedingungen in nicht funktionalisierte, monofunktionelle und bifunktionelle Anteile getrennt:

- Säule: Li-Chrosorb CN (5 um), Fa. Merck, Darmstadt
- Lösungsmittelpaar: A = Cyclohexan/B = Methylenchlorid
- Gradient: 100 % A → 30 Min. → 58 % B + 42 % A
- Durchflußrate: 1 ml/min.
- Detektor: Massendetektor der Fa. Zinsser Analytik, Frankfurt, Modell 750/14

Ausgewertet wurden die scharf getrennten Flächen der drei Komponenten, von denen zuerst der nicht funktionalisierte Anteil, dann der monofunktionelle Anteil und zuletzt das bifunktionelle Telechel registriert wurde.

Bestimmung der OH-Zahl

Die OH-Zahl wurde mit einer an DIN 53 240 angelehnten modifizierten Vorschrift mit Phthalsäureanhydrid bestimmt, wobei nach der Umsetzung (vor der Titration) 30 $cm^3$ n-Heptan zugesetzt wurde.

Beispiele 1 - 3

In diesen Beispielen wird gezeigt, wie die Funktionalität eines OH-terminierten Butadientelechelen durch hohe Monomerkonzentrationen bei der Initiierung angehoben werden kann.

Herstellung des Initiators

In einem mit Magnetrührer und Temperaturmessung ausgerüsteten 50 $cm^3$ Zweihalskolben, der mit Reinstickstoff gespült wird, werden in dieser Reihenfolge
2 g Lithiumgranulat
9,74 g (40 mMol) des Olefins II und
10,5 $cm^3$ (7,5 g = 100 mMol) Diethylether
gegeben. Der offene Stutzen wird mit einer Gummikappe verschlossen. Die Reaktion setzt unter Kühlung mit Wasser von 25 °C und intensivem Rühren sofort unter Färbung nach braunorange ein und ist nach einer Stunde beendet. 21 $cm^3$ Reaktionslösung enthalten 20 mMol bifunktionellen Initiator.

Erfindungsgemäße Arbeitsweise

Als Reaktor für beide Reaktionsstufen dient ein 500 $cm^3$ Rundkolben, der mit einem kräftigen, wandgängigen Rührer mit einem Teflonblatt, einer mit Methanol/Trockeneis gekühlten, kalibrierten Vorlage für flüssiges Butadien, einer weiteren Vorlage für Methylcyclohexan sowie einer Temperaturmeßeinrichtung

ausgestattet ist. Der Reaktor wird unter einem Reinstickstoffpolster betrieben. Alle Teile des Reaktors werden vor Durchführung der Versuche mit Methylcyclohexan, das 1 % Lithiumbutyl enthält, gewaschen.

Die Butadienvorlage wird mit 20 g (ca. 31,5 $cm^3$) gereinigtem Butadien, die 2. Vorlage mit 320 $cm^3$ Methylcyclohexan gefüllt. Der Reaktor wird auf -10 °C gekühlt und aus den Vorlagen mit 20 $cm^3$ Methylcyclohexan sowie für Beispiel 1 bzw. 2 bzw. 3 mit 3 bzw. 6 bzw. 9 $cm^3$ Butadien beschickt. Durch einen mit einer Gummikappe verschlossenen Stutzen wird mit einer Injektionsspritze aus Polypropylen jeweils 4,2 $cm^3$ = 4 mMol der Katalysatorlösung zugegeben (Stufe 1). Nach 30 Minuten wird die viskose Lösung mit 50 $cm^3$ Methylcyclohexan verdünnt und auf 65 °C erwärmt. Nach Entnahme einer Probe von 1 $cm^3$ wird bei dieser Temperatur das restliche Lösungsmittel und Butadien so zugeführt, daß nur wenig Rückfluß auftritt (Stufe 2). Anschließend wird 30 Minuten polymerisiert und die hochviskose Lösung auf 30 °C abgekühlt. Bei dieser Temperatur werden unter intensivem Rühren mit einer Polypropylenspritze 10 $cm^3$ einer 1 molaren Lösung von Ethylenoxid in Methylcyclohexan durch die Gummikappe in die Lösung eingespritzt. Die Lösung verwandelt sich nach wenigen Sekunden in eine aspikähnliche Masse, die unter weiterem intensivem Rühren in einen dicken Brei übergeht. Nach 60 Minuten werden einige Tropfen Methanol zugesetzt und die jetzt wasserdünne Lösung unter intensivem Rühren in 1000 $cm^3$ Ethanol eingegossen. Man läßt absitzen, gießt die obere Schicht ab und wäscht das verbleibende Öl unter intensivem Rühren noch 2 x mit jeweils 300 $cm^3$ Ethanol aus. Das Öl wird nun mit ca. 20 mg ®Irganox 1076 (Stabilisator der Fa. Ciba-Geigy AG, Basel) verrührt und im Vakuumtrockenschrank bei 70 °C getrocknet. Die Analysedaten der Versuche sind in Tabelle 1 wiedergegeben.

Beispiele 4 und 5

Es wird verfahren wie vorstehend beschrieben, jedoch wird ein aus III ($\beta$-iso-Octylstyrol) hergestellter Initiator verwendet. Bei der Polymerisation wird in der 1. Verfahrensstufe bei Beispiel 4 dreimal je 3 $cm^3$ Butadien im Abstand von 15 Minuten zugesetzt, während im Beispiel 5 9 $cm^3$ Butadien auf einmal verwendet wurden. Die Analysedaten sind in Tabelle 1 wiedergegeben.

Beispiel 6

Es wird gearbeitet analog Beispiel 3, jedoch mit einem Katalysator aus dem Olefin IV. Analysendaten sind in Tabelle 1 wiedergegeben.

Beispiel 7

Es wird gearbeitet analog Beispiel 3, jedoch mit dem Katalysator aus 1,1-Diphenylethylen (I). Der Katalysator fällt bei der Zugabe zunächst aus, geht jedoch innerhalb von 45 Minuten allmählich in Lösung. Die Analysendaten sind in Tabelle 1 wiedergegeben.

Tabelle 1

Abhängigkeit der Eigenschaften OH-terminierter Telechele von der Butadienkonzentration der ersten Polymerisationsstufe und vom Katalysatortyp.

| Beispiel | Initiator | Butadienkonz. | | Polymerkonfiguration | | | | $\bar{M}_n$ | $\bar{M}_w/\bar{M}_n$ | Gehalt |
|---|---|---|---|---|---|---|---|---|---|---|
| | | mol/l | Vol.% | Vorpolym. | | Endprod. | | x | | Oligomere |
| | | | | 1,4* | 1,2** | 1,4* | 1,2** | $10^{-3}$ | | F = 2 Gew.-% |
| 1 | II | 1,3 | 11 | 34 | 66 | 69 | 31 | 9,8 | 1,75 | 73 |
| 2 | II | 2,4 | 21 | 33 | 67 | 68 | 32 | 8,3 | 1,18 | 97 |
| 3 | II | 3,2 | 28 | -- | -- | 66 | 34 | 5,7 | 1,09 | 99 |
| 4 | III | 1,3 (3x) | 11 | 33 | 67 | 67 | 33 | 7,1 | 1,09 | 86 |
| 5 | III | 4,0 | 36 | -- | -- | 69 | 31 | 6,2 | 1,08 | 91 |
| 6 | IV | 4,0 | 35 | 28 | 72 | 63 | 35 | 6,9 | 1,1 | 96 |
| 7 | I | 3,2 | 28 | -- | -- | 61 | 39 | 6,0 | 1,08 | 96 |

* Summe aus cis- und trans-Konfiguration

** und/oder 2-Konfiguration

Aus den Beispielen 1, 2 und 3 ist zu entnehmen, daß der Gehalt der Telechelen an bifunktionellen Oligomeren mit der Butadienkonzentration der 1. Reaktionsstufe steil ansteigt und die Molmassenverteilung enger wird.

Aus den Beispielen 4 und 5 ist zu entnehmen, daß bei gleichem Gesamtumsatz der Versuch mit der höheren erfindinngsgemäßen Dienkonzentration in der 1. Polymerisationsstufe die höheren Gehalte der Telechelen an bifunktionellen Oligomeren ergibt.

Der Vergleich der Versuche 5 und 6 bzw. 7 und 3 zeigt, daß Initiatoren aus in den aromatischen Kernen durch Alkylgruppen substituierten Derivaten höhere Ausbeuten an bifunktionellen Oligomeren ergeben als solche aus den nicht substituierten Grundstoffen.

Beispiele 8, 9, 10, 12 und 13

In den folgenden Beispielen wird im wesentlichen etherfreie Initiatoren verwendet, die in reinen Dienen gelöst wurden.

Versuchsbeschreibung

6 mMol Tetramethyldiphenylethylen bzw. die anderen in Tab. 2 aufgeführten Olefine werden in 20 $cm^3$ Diethylether mit 2 g metallischem Lithium unter Stickstoff zu dem entsprechenden bifunktionellen Initiator umgesetzt. Die tiefgefärbte Lösung wird dann mit einer Spritze aus Polypropylen in den 500 $cm^3$ Rundkolben des Reaktors gemäß Beispiel 1 überführt. Die Lithium wird 2 x mit je 10 $cm^3$ Toluol gewaschen. Die Waschlösung wird ebenfalls in den 500 $cm^3$ Kolben überführt. Der Ether und der größte Teil des Toluols werden im Vakuum abgezogen, wobei der Kolben am Ende mit einem 30 °C warmem Wasserbad beheizt wird. Der Katalysator wird durch den Rührer als dünne ölige Schicht an der Kolbenwand verteilt.

Nach dem Abkühlen des Kolbens mit einer Solelösung von -10 °C werden aus der mit 30 g = 47 $cm^3$ befüllten Butadienvorlage 24 $cm^3$ Butadien zugegeben, in dem sich der Katalysator auflöst. Nach einer Stunde bei dieser Tempertur ist die Lösung fast farblos geworden. Es werden nun 25 $cm^3$ Cyclohexan zugegeben und die Mischung auf 60 °C aufgewärmt, wobei der größte Teil des Butadiens in die Butadienvorlage zurückdestilliert.

Das gesamte Butadien wird bei dieser Temperatur zusammen mit 200 $cm^3$ Heptan und 25 $cm^3$ Cyclohexan innerhalb von 2 Stunden so in den Reaktor gefahren, daß nur wenig Rücklauf entsteht. In weiteren 30 Minuten wird auspolymerisiert, wobei eine hochviskose Lösung entsteht. Es wird nun auf 30 °C abgekühlt und unter untensivem Rühren mit einer Polypropylenspritze 12 $cm^3$ einer 1 molaren Lösung von Ethylenoxid in Cyclohexan zugegeben. Die Lösung erstarrt innerhalb von 10 sec. zu einem Aspik, der allmählich in einen dicken Brei übergeht. Nach Stehen über Nacht wird mit einigen Tropfen Methanol abgebrochen und die Lösung unter intensivem Rühren in 1000 $cm^3$ Ethanol gegossen. Das Telechel setzt sich als Öl ab. Nach Dekantieren wird 2 x mit je 500 $cm^3$ Ethanol ausgerührt. Das abgetrennte Öl wird mit 200 mg Irganox 1076 (Handelsname der Fa. Ciba-Geigy, Basel) stabilisiert und im Hochvakuum bei 120 °C von flüchtigen Anteilen befreit.

Im Beispiel 13 erfolgte die Terminierung mit Benzylidenanilin,

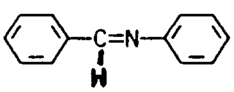 ,

wobei nur ein Viskositätsanstieg, jedoch keine Gelierung erfolgte. Die Durchmischung bereitet daher keine Schwierigkeiten, und der Umsatz bei der Terminierung ist besonders hoch, was am niedrigen Gehalt an nichtfunktionalisierten Oligomeren zu erkennen ist. Der nach Kjeldahl bestimmte Stickstoffgehalt war 0,44 %.

Die Analysendaten dieser Beispiele sind in Tabelle 2 wiedergegeben.

Beispiele 11, 14, 15, 16 und 17

In diesen Beispielen wurde anstelle von Butadien mit Isopren oder Dimethylbutadien gearbeitet. Die Auflösung der Katalysatoren und die erste Polymerisationsstufe erfolgte bei Zimmertemperatur. Die Analysendaten sind ebenfalls in Tabelle 2 wiedergegeben.

Tabelle 2

Abhängigkeit der Eigenschaften OH-terminierter Telechele von der Butadienkonzentration der ersten Polymerisationsstufe und vom Katalysatortyp.

| Beispiel | Initiator Zusammensetzung mmol% | Mono-mer | End-gruppen | N-Gehalt % | Polymerkonfiguration 1,4* % | 1,2* % | 3,4- % | $\overline{M}_n$ x $10^{-3}$ | $\overline{M}_w/\overline{M}_n$ | Gew.-% Oligomer mit F = 23378 F/O | 1 | 2 | OH-Zahl |
|---|---|---|---|---|---|---|---|---|---|---|---|---|---|
| 8 | II | Bu | -OH | - | 76 | 26 | -- | 6,35 | 1,07 | 2,0 | 3,0 | 95,0 | 18,2 |
| 9 | 70 V/30 IV | Bu | -OH | - | 76 | 24 | -- | 5,3 | 1,05 | 1,5 | 4,5 | 94,0 | 20 |
| 10 | 70 VI/ 30 IV | Bu | -OH | - | -- | -- | -- | 5,4 | 1,05 | 1,1 | 6,9 | 92,0 | 20,4 |
| 11 | III | Is | -OH | - | -- | -- | -- | 4,7 | 1,1 | 1,0 | 11,0 | 88,0 | 23,0 |
| 12 | 80 II/20 I | Bu | -OH | - | 78,4 | 21,6 | -- | 5,8 | 1,05 | 0,4 | 1,1 | 98,5 | 20,5 |
| 13 | 80 II/20 I | Bu | -NH- 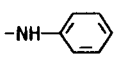 | 0,59 | -- | -- | -- | 5,9 | 1,06 | 0,2 | 1,0 | 98,8 | 20,2 |
| 14 | 70 V/30 IV | Is | -OH | - | 87,1 | -- | 12,9 | 6,2 | 1,08 | 0,5 | 5,0 | 94,5 | 19,0 |
| 15 | 70 VI/30 IV | Is | -OH | - | -- | -- | -- | 6,1 | 1,1 | 0,5 | 4,0 | 95,5 | 18,9 |
| 16 | 80 II/20 I | DMBu | -OH | - | -- | -- | -- | 5,6** | 1,35 | 9,0 | 19,0 | 72,0 | - |
| 17 | VII | Is | -OH | - | 88,6 | -- | 11,4 | 6,0 | 1,09 | 1,0 | 4,0 | 95,0 | 19,2 |

Bu = Butadien
Is = Isopren

DMBu = 2,3-DimethylbutadienSumme aus cis- und trans-Konfiguration
*) gemessen an einer Polybutadieneichkurve
**)

Im Beispiel 11 wurde ein aus β-Isooctylstyrol hergestellter Initiator verwendet. Dieser ergibt, da der aromatische Kern nicht alkyliert ist, wie auch im Beispiel 6, eine schlechtere Ausbeute an bifunktionellen Telechelen.

Ein sehr gutes Ergebnis wurde im Beispiel 17 bei Verwendung eines Katalysators aus einem in beiden Kernen alkylierten Stilbens erzielt.

In den Beispielen 9 - 16 wurden Mischungen von Ausgangsolefinen verwendet, um die Kristallisationsneigung der aus reinem 3,4,3',4'-Tetramethyldiphenylethylen bzw. 3,4-Dimethyl-$\beta$-ethylstyrol bzw. 3,4,5-Trimethyl-$\beta$-ethylstyrol hergestellten Katalysatoren zu unterdrücken.

Besonders gute Ergebnisse wurden, wenn man von Beispiel 11 absieht, bei der Herstellung von Telechelen aus Isopren erzielt. Das liegt insbesondere an der bei Zimmertemperatur schneller erfolgenden Auflösung der Initiatoren im Monomeren, die bei Verwendung von Butadien wegen dessen Siedepunkt von -5 °C sehr langsam erfolgt.

## Patentansprüche

**1.** Verfahren zur Herstellung von bifunktionellen lebenden Polymeren, die bifunktionelle Telechelen oder Blockcopolymere mit mindestens 3 Blöcken aus konjugierten Dienen und/oder Vinylaromaten mit Molmassen zwischen 1.500 und 500.000 bilden können, indem man bifunktionelle Initiatoren, deren anionische Zentren aliphatische C-Atome sind, die, außer durch Lithium und einen aliphatischen Kohlenwasserstoffrest, entweder durch 2 Arylreste oder durch einen Arylrest und ein Wasserstoffradikal substituiert sind, wobei einer der Arylreste auch Bestandteil beider anionischen Zentren sein kann,
- in einer ersten Stufe in Gegenwart von höchstens 2,5 Mol eines aliphatischen Ethers oder tertiären Amins je Mol Lithium und mindestens 2 Mol/l eines konjugierten Diens bei einer Temperatur von -40 bis +35 °C mit mindestens zwei Mol Dien umsetzt, wobei niedermolekulare, ihrerseits als bifunktionelle Initiatoren wirksame Dienoligomere gebildet werden und mit diesen
- in einer zweiten Reaktionsstufe in an sich bekannter Weise bei einer Temperatur über 40 °C, gegebenenfalls unter Zugabe weiterer Monomerer Polymere der gewünschten Molmasse gewinnt.

**2.** Verfahren nach Anspruch 1, dadurch gekennzeichnet, daß in der ersten Verfahrensstufe als Monomeres Butadien oder Isopren verwendet wird.

**3.** Verfahren nach Anspruch 1, dadurch gekennzeichnet, daß man bifunktionelle Initiatoren verwendet, die im aromatischen Kern durch jeweils 1 bis 4 Alkylgruppen substituiert sind.

**4.** Verwendung der lebenden Polymeren, wie sie nach Anspruch 1 erhalten werden, zur Herstellung von Telechelen und Blockcopolymeren, indem man entweder die lebenden Polymeren unmittelbar mit Funktionalisierungsreagentien in Telechele umwandelt, oder andere Monomere aufpolymerisiert und die entstandenen Blockcopolymeren entweder in Telechele umwandelt, oder nach Protonierung als solche isoliert.

## Claims

**1.** A process for preparing bifunctional living polymers which are able to form bifunctional telechelic polymers or block copolymers with at least 3 blocks of conjugated dienes and/or vinylaromatics with molecular weights of from 1,500 to 500,000, by bifunctional initiators whose anionic centers are aliphatic carbon atoms which are substituted by lithium and an aliphatic hydrocarbon radical as well as by either 2 aryl radicals or by one aryl radical and one hydrogen radical, where one of the aryl radicals can also be part of the two anionic centers,
- in a first stage being reacted in the presence of not more than 2.5 moles of an aliphatic ether or a tertiary amine per mole of lithium and not less than 2 mol/l of a conjugated diene at from -40 to +35 °C with not less than two moles of diene, resulting in the formation of low molecular weight diene oligomers which in turn act as bifunctional initiators, and using the latter
- in a second reaction stage in a conventional manner at above 40 °C, with or without the addition of other monomers, to obtain polymers of the required molecular weight.

**2.** A process as claimed in claim 1, wherein butadiene or isoprene is used as monomer in the first stage.

**3.** A process as claimed in claim 1, wherein bifunctional initiators which are substituted in the aromatic nucleus by 1 to 4 alkyl groups in each case are used.

**4.** The use of the living polymers obtained as claimed in claim 1 for preparing telechelic polymers and block copolymers by either converting the living polymers directly with functionalizing reagents into telechelic polymers or polymerizing on other monomers, and the resulting block copolymers being

either converted into telechelic polymers or isolated as such after protonation.

**Revendications**

1. Procédé pour la préparation de polymères vivants bifonctionnels qui peuvent former des polymères téléchéliques bifonctionnels ou encore des copolymères séquencés contenant au moins trois séquences de diènes conjugués et/ou de composés vinylaromatiques avec des masses molaires entre 1.500 et 500.000, dans lequel on fait réagir des initiateurs bifonctionnels dont les centres anioniques sont des atomes de carbone aliphatiques qui, en plus d'être substitués par du lithium et par un radical d'hydrocarbure aliphatique, le sont, soit par 2 radicaux aryle, soit par un radical aryle et par un radical d'hydrogène, dans lequel un des radicaux aryle peut également être un constituant des deux centres anioniques,
    - dans une première étape, en présence d'au maximum 2,5 moles d'un éther aliphatique ou d'une amine tertiaire par mole de lithium et d'au moins 2 moles/l d'un diène conjugué, à une température de -40 à +35°C, avec au moins 2 moles de diène, dans laquelle on forme des oligomères diéniques à bas poids moléculaire exerçant, quant à eux, une activité d'initiateurs bifonctionnels, et avec ces derniers
    - dans une seconde étape réactionnelle, d'une manière connue en soi, à une température supérieure à 40°C, éventuellement avec addition d'autres monomères, on obtient des polymères possédant la masse molaire désirée.

2. Procédé selon la revendication 1, caractérisé en ce que, dans la première étape opératoire, comme monomère, on utilise le butadiène ou l'isoprène.

3. Procédé selon la revendication 1, caractérisé en ce qu'on utilise des initiateurs bifonctionnels qui sont substitués dans le noyau aromatique par, respectivement, 1 à 4 groupes alkyle.

4. Utilisation des polymères vivants tels qu'on les obtient conformément à la revendication 1, pour la préparation de polymères téléchéliques et de copolymères séquencés, dans laquelle, soit on transforme immédiatement les polymères vivants avec des réactifs de fonctionnalisation en polymères téléchéliques, soit on polymérise d'autres monomères et, soit on transforme les copolymères séquencés obtenus en polymères téléchéliques, soit on les isole comme tels après protonation.